Europäisches Patentamt

European Patent Office

Office européen des brevets

(19)

(11) Veröffentlichungsnummer : **0 490 949 B1**

(12) **EUROPÄISCHE PATENTSCHRIFT**

(45) Veröffentlichungstag der Patentschrift :
27.10.93 Patentblatt 93/43

(51) Int. Cl.$^5$ : **B32B 3/30,** B32B 15/08

(21) Anmeldenummer : 90913480.1

(22) Anmeldetag : 18.08.90

(86) Internationale Anmeldenummer :
PCT/EP90/01365

(87) Internationale Veröffentlichungsnummer :
WO 91/03373 21.03.91 Gazette 91/07

(54) METALL-KUNSTSTOFFVERBUNDE, VERFAHREN ZUR HERSTELLUNG SOWIE IHRE VERWENDUNG.

(30) Priorität : 08.09.89 DE 3929942

(43) Veröffentlichungstag der Anmeldung :
24.06.92 Patentblatt 92/26

(45) Bekanntmachung des Hinweises auf die
Patenterteilung :
27.10.93 Patentblatt 93/43

(84) Benannte Vertragsstaaten :
AT BE CH DE DK ES FR GB IT LI NL SE

(56) Entgegenhaltungen :
DE-A- 1 903 783
US-A- 3 265 785

(73) Patentinhaber : BASF Lacke + Farben AG
Glasuritstrasse 1
D-48165 Münster-Hiltrup (DE)

(72) Erfinder : HUB, Hans-Henning
Dr. Illertstrasse 37
D-6520 Worms 23 (DE)
Erfinder : KRAUSE, Siegfried
Auf der Woort 19
D-4400 Münster (DE)

(74) Vertreter : Münch, Volker, Dr.
c/o BASF Lacke + Farben AG
Patente/Lizenzen/Dokumentation, Postfach 61
23
D-48136 Münster (DE)

## Beschreibung

Gegenstand der vorliegenden Erfindung ist ein Metallblech mit einer auflaminierten thermoplastischen Folie, wobei die Folie ein sich wiederholendes Muster von Verdickungen aufweist.

Die Erfindung betrifft außerdem Verfahren zur Herstellung der Metallbleche, die zur Beschichtung der Metallbleche eingesetzten thermoplastischen Verbundfolien sowie die Verwendung der beschichteten Metallbleche zur Herstellung von Verpackungsbehältern und von Verschlußteilen für Verpackungsbehälter.

Zur Herstellung einer Dose oder eines Verschlusses für den Einsatz als Verpackungsmaterial, insbesondere für die Verpackung von Lebensmitteln, werden Bleche aus Weißblech, chromatiertem Stahl wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführten Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu den Dosen oder Verschlüssen auftretenden mechanischen Beanspruchungen, etwa beim Verformen, Stanzen, Bördeln, Sicken u.ä. der Bleche, standhalten.

Bei der Herstellung von Deckeln und Böden von Dosen sowie bei Verschlüssen ist zusätzlich ein Dichtungsmaterial erforderlich, um die Dichtigkeit entweder zwischen den Metallteilen oder zwischen Metall und Glas o.ä. herzustellen. Diese Dichtungsfunktion wird durch Aufbringen einer Dichtungsmasse auf die beschichteten und bereits verformten Verpakkungsteile (Böden, Deckel, Verschlüsse) sowie Gelieren bzw. Trocknen der Dichtungsmasse bei erhöhten Temperaturen erzeugt.

Diese Herstellung von Deckeln und Böden von Dosen sowie von Verschlüssen ist aber mit einem hohen Energieaufwand verbunden, da Lack und Dichtungsmasse getrennt eingebrannt werden. Aufgrund der hohen Zahl von gefertigten Deckeln, Böden und Verschlüssen stellt dieser zusätzliche Verfahrensschritt auch einen erheblichen Kostenfaktor dar.

Außerdem müssen aufgrund von hohen Lösemittelemissionen sowohl beim Trocknen der Lackschicht als auch beim Trocknen der Dichtungsmasse Vorkehrungen getroffen werden, diese Emissionen und die damit verbundene Umweltbelastung so gering wie möglich zu halten.

Als vorteilhaftes Verfahren für die Beschichtung von Blechen, die insbesondere zur Herstellung von Lebensmittelverpackungen eingesetzt werden, hat sich die Folienbeschichtung von Metallblechen erwiesen. So ist beispielsweise in der DE-A- 3128641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird.

Bei der Herstellung von Deckeln und Böden sowie von Verschlußteilen muß aber auch hier die Dichtungsmasse in einem weiteren Verfahrensschritt in die vorgeformten Deckel und Böden eingebracht und ausgehärtet werden.

Weiterhin sind auch aus der DE-A- 2912023, der GB-A-2027391 und der EP-B-31701 Laminate und aus diesen Laminaten hergestellte Lebensmittelverpackungsbehälter, insbesondere Beutel, bekannt. Die Verwendung dieser Laminate zur Herstellung von Verschlußteilen für Verpackungsbehälter ist allerdings nicht beschrieben.

Aus der EP-B-41512 ist nun ein Verfahren zur Herstellung von Behältern bekannt, bei dem ebenfalls Laminate eingesetzt werden, und zwar zur Fertigung der Deckel bzw. Böden der Dosen bzw. zur Fertigung von Ventiltellern von Aerosoldosen. Die Polymerschicht dieser Laminate dient dann bei der Herstellung der Behälter gleichzeitig als Dichtung und als Schutzschicht, so daß bei diesem Verfahren das Aufbringen einer Dichtungsmasse auf die Verschlußteile nicht erforderlich ist. Nachteilig bei diesem Verfahren ist jedoch, daß zur Gewährleistung der Dichtungsfunktion eine sehr hohe Schichtdicke der auflaminierten polymeren Schicht von ca. 200 µm erforderlich ist. Der mit dieser Schichtdicke verbundene hohe Materialverbrauch führt zu einer starken Verteuerung der Herstellkosten für die Behälter und stellt somit einen erheblichen wirtschaftlichen Nachteil dieses Verfahrens dar, zumal, wenn man berücksichtigt, daß es sich bei den Behältern um Massenprodukte mit sehr hohen Stückzahlen handelt.

Aus der Patentanmeldung ZA-A-880198 ist es bekannt, bei der Herstellung von Dosen die Dichtung der Verbindung zwischen Dosenrumpf und Dosendeckel durch Einlegen eines Dichtlaminates zwischen Deckel und Rumpf zu gewährleisten. Auch dieses Verfahren ist sehr aufwendig, da zunächst die als Dichtmaterial dienenden Laminate zugeschnitten und dann in das Verschlußteil eingepaßt werden müssen.

Die EP-B-167775 schließlich beschreibt ein Verfahren und eine Vorrichtung zum kontinuierlichen Herstellen von Gegenständen oder Beschichtungen mit kompliziert geformten Konturen, beispielsweise zur Runderneuerung von Autoreifen, bei dem ein flüssiges Material zwischen mindestens zwei wandernden, endlosen, formgebenden Flächen eingebracht und gehärtet wird. Die Herstellung von thermoplastischen Verbundfolien oder die Anwendung des Verfahrens zur Herstellung von Metallblechen für die Verwendung als Verschlußteile von Verpackungsbehältern ist jedoch nicht beschrieben.

In der US-A- 3,265,785 ist ein Verfahren zur Herstellung von Verschlußteilen von Verpackungsbehältern beschrieben, bei dem als Dichtungsmasse ein schäumbares Vinylharz-Plastisol in das bereits verformte Verschlußteil gegeben und derart verformt wird, daß die Plastisolschicht eine ringförmige ("O-ring") wulstartige Verdickung aufweist. Zur Erzielung der Dichtungsfunktion wird das Plastisol vor, während oder nach der Verformung auf eine genügend hohe Temperatur erhitzt, um das in dem Plastisol enthaltene Schäummittel zu zersetzen.

Ferner ist in der DE-A- 19 03 783 ein Verfahren für die Beschichtung von Substraten mit einer thermoplastischen Folie beschrieben, wobei der thermoplastische Film ein vorgewähltes Profil von Zonen unterschiedlicher Dicke aufweist. Dieses Verfahren dient zur Herstellung beschichteter Schachtel- oder Kartonzuschnitte, die zum Verpacken von Flüssigkeiten, wie z. B. Milch oder Saft, eingesetzt werden. Diese beschichteten Schachtel- oder Kartonzuschnitte weisen im Bereich der Siegel- bzw. Schweißnähte eine erhöhte Schichtdicke auf, um so leckdicht gemacht werden zu können.

Der vorliegenden Erfindung lag somit die Aufgabe zugrunde, beschichtete Metallbleche zur Verfügung zu stellen, die für den Einsatz als Verpackungsmaterial geeignet sind. Insbesondere sollten durch Verwendung dieser beschichteten Metallbleche als Verschlußteil wie z. B. Dosendeckel, Dosenboden, Ventilteller und Schraubverschluß die Verpackungsbehälter mittels eines einfachen und preisgünstigen Verfahrens herstellbar sein, wobei dieses Verfahren die genannten Nachteile des Standes der Technik nicht aufweisen sollte. Weiterhin sollten diese beschichteten Bleche die genannten Anforderungen bezüglich mechanischer Eigenschaften und bezüglich der Verträglichkeit und Schutzwirkung gegenüber den Füllgütern erfüllen.

Überraschenderweise wird diese Aufgabe gelöst durch eine thermoplastische Verbundfolie, bestehend aus mindestens einer Haftvermittlerschicht und mindestens einer weiteren, auf der Haftvermittlerschicht angeordneten thermoplastischen Schicht, dadurch gekennzeichnet, daß die thermoplastische Verbundfolie ring- oder scheibenförmige wulstartige Verdickungen der Haftvermittler- und/oder Deckschicht aufweist und daß die wulstartigen Verdickungen ein sich sowohl in der Quer als auch in der Längsrichtung wiederholendes Muster bilden.

Gegenstand der vorliegenden Erfindung ist außerdem ein Metallblech mit der auflaminierten thermoplastischen Verbundfolie, ein Verfahren zur Herstellung der erfindungsgemäßen Metallbleche sowie die Verwendung der erfindungsgemäßen Metallbleche zur Herstellung von Verpackungsbehältern und Verschlußteilen von Verpackungsbehältern.

Die Vorteile der erfindungsgemäßen beschichteten Metallbleche sind im wesentlichen darin zu sehen, daß sie sich hervorragend für die Fertigung von Verschlußteilen von Verpackungsbehältern, wie z.B. Deckeln, Böden und Verschlüssen eignen, wobei es von besonderem Vorteil ist, daß durch die integrierte Dichtfunktion der beschichteten Metallbleche der sonst bei der Herstellung von Verschlußteilen erforderliche Verfahrensschritt des Einbringens einer Dichtungsmasse entfällt. Durch Verwendung der erfindungsgemäß beschichteten Metallbleche gelingt daher die Herstellung der Verpackungsbehälter mittels eines einfachen und vor allem preisgünstigen Verfahrens.

Im folgenden werden nun zunächst die zur Herstellung der erfindungsgemäßen beschichteten Metallbleche geeigneten Materialien näher erläutert. Danach folgt die Beschreibung der Herstellung der erfindungsgemäßen Metallbleche.

Metallblech:

Zur Herstellung der erfindungsgemäßen beschichteten Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind.

Diese Metallbleche sind mit einer oder mehreren, ggf. verschiedenen Harzschichten beschichtet, wobei es erfindungswesentlich ist, daß das beschichtete Metallblech die die Dichtungsfunktion übernehmenden wulstförmigen Verdickungen aufweist.

Erfindungsgemäß werden die Metallbleche erhalten, indem zum Beschichten der Metallbleche thermoplastische Verbundfolien eingesetzt werden, die aus mindestens einer Haftvermittlerschicht und mindestens einer weiteren, auf der Haftvermittlerschicht angeordneten thermoplastischen Schicht bestehen.

Thermoplastische Deckschicht der Verbundfolie:

Die erfindungsgemäß als Deckschicht verwendeten thermoplastischen Harzfolien oder -filme umfassen Polyolefine, Polyamide, Polyester, Polyvinylchlorid, Polyvinylidenchlorid und Polycarbonate jeweils in Form einer Folie oder eines Films. Sie umfassen auch zusammengesetzte Folien und Filme (Verbundfolie und -filme), die beispielsweise erhalten werden durch gemeinsames Extrudieren von mindestens zwei der obengenannten Harze. Die bevorzugte thermoplastische Folie oder der bevorzugte thermoplastische Film, die (der) die innerste Schicht (dies ist die mit den Füllgütern in Kontakt stehende Schicht) der Metall-Kunststoff-Verbunde darstellt, umfaßt bevorzugt eine Folie oder einen Film aus einem Polyolefin, Polyester oder Polyamid. Derartige Folien und Filme sind bekannt und in einer Vielzahl auf dem Markt erhältlich.

Derartige Polyolefinfolien werden nach bekannten Verfahren (Blasverfahren, Chill-roll Verfahren etc.) aus Granulaten von Homopolymeren des Ethylens und Propylens sowie Copolymeren gefertigt. Zu nennen sind Polyethylen niedriger Dichte (PE-LD), mittlerer Dichte (PE-MD), hoher Dichte (PE-HD), linear low und linear very low density Polyethylene (PE-LLD, PE-VLD) Polypropylen, dessen Copolymere mit Ehtylen sowie die Copolymeren des Ethylens mit einem oder mehreren Comonomeren aus den Gruppen der Vinylester, Vinylalkylether, unge- sättigten Mono- und Dicarbonsäuren, deren Salzen, An- hydriden und Estern.

Diese Polyolefine sind beispielsweise unter den folgenden Markennamen im Handel erhältlich:
Escorene, Lupolen, Lotader, Lacqtene, Orerac, Lucalen, Dowlex, Primacor, Surlyn, Admer, Novatec, Sclair, Stamylan u.a.

Beispiele für als Deckschicht geeignete Polyamide sind Polyamid 6 (Polyamid hergestellt aus ε-Aminocapronsäure), Polyamid 6,6 (Polyamid hergestellt aus Hexamethylendiamin und Sebacinsäure), Polyamid 66,6 (Mischpolyamid, das aus Polyamid 6 und Polyamid 6,6 besteht), Polyamid 11 (Polyamid hergestellt aus ω - Aminoundecansäure) und Polyamid 12 (Polyamid hergestellt aus ω-Aminolaurinsäure oder aus Lauryllactam). Beispiele für Handelsprodukte sind Grilon, Sniamid und Ultramid.

Bevorzugt eingesetzte Polyester sind Polyethylenterephthalat, Polybutylenterephthalat sowie Polyester auf Basis von Terephthalsäure, Ethylen- und Butylenglykol. Geeignet sind aber auch andere Polyester auf Basis von Terephthalsäure, Isophthalsäure und Phthalsäure und verschiedener Polyole wie z.B. Polyethylenglykol und Polytetramethylenglykole unterschiedlichen Polymerisationsgrades.

Beispiele für geeignete Handelsprodukte sind Hostaphan, Melinex und Hostadur.

Haftvermittlerschicht der thermoplastischen Verbundfolie

Die als Haftvermittlerschicht in dem erfindungsgemäßen Verfahren eingesetzten Polymeren können sowohl Copolymere, Terpolymere, Pfropfcopolymere und Ionomere sein, mit der Maßgabe, daß sie Carboxyl- oder Anhydridgruppen oder Gruppen, die zu Carboxylgruppen hydrolysierbar sind, aufweisen und daß der Schmelzindex der Polymeren gemessen bei 190 °C und einer Belastung von 2,16 kg zwischen 0,1 und 30 g/10 min, bevorzugt zwischen 0,2 und 25 g/10 min und besonders bevorzugt zwischen 0,5 und 20 g/10 min liegt.

Geeignete Co- bzw. Terpolymere sind herstellbar durch Copolymerisation von Ethylen mit α,β -ungesättigten Carbonsäuren wie z.B. Acrylsäure, Methacrylsäure, Itaconsäure, Crotonsäure, Isocrotonsäure, Maleinsäure und Fumärsäure, den entsprechenden Anhydriden oder den entsprechenden Estern oder Halbestern mit 1 bis 8 C-Atomen im Alkoholrest wie z.B. die Methyl-, Ethyl-, Propyl-, Butyl-, Pentyl-, Hexyl-, Cyclohexyl, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium-, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entstehende Polymer einen Carboxylgruppengehalt von 0,1 bis 30 Gew.-% bevorzugt 2 bis 20 Gew.-% aufweist und daß der Gehalt an Ethyleneinheiten im Polymer zwischen 99,9 Gew.-%, bevorzugt zwischen 75 und 95 Gew.-% liegt.

Geeignete Pfropfcopolymere sind herstellbar durch Pfropfung von mindestens einem Polymeren aus der Gruppe der Polyolefine mit bis 10 Gew.-%, bevorzugt bis zu 5 Gew.-%, bezogen auf das Gesamtgewicht der Monomeren mindestens eines Monomeren aus der Gruppe der α,β -ungesättigten Carbonsäuren, deren Anhydride, deren Estern oder Salzen in Gegenwart oder Abwesenheit von Peroxiden. Beispiele von geeigneten Polyolefinen sind die bereits bei der Beschreibung der Deckschichten auf Seite 7 dieser Beschreibung aufgeführten Polyolefine. Beispiele für geeignete Carbonylverbindungen sind die oben bei der Beschreibung der Haftvermittler auf Copolymerbasis aufgeführten Carbonylverbindungen.

Die als Haftvermittlerschicht eingesetzten Ionomeren sind herstellbar durch die bereits oben beschriebene Copolymerisation von Ethylen und ggf. weiteren Monomeren mit Salzen $\alpha,\beta$ -ungesättigter Carbonsäuren oder durch partielle Neutralisation von den bereits oben beschriebenen Carbonsäurehaltigen Co-, Ter- und Pfropfpolymeren mit Salzen, Oxiden und Hyroxiden von Natrium, Kalium, Lithium,- Magnesium, Calcium, Zink und Ammonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.

Sowohl die Haftvermittlerschicht als auch die thermoplastische Deckschicht können noch übliche Additive wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem entsprechenden Poly- mer eingearbeiteten Konzentrat eingesetzt. Nähere An- gaben zu den üblicherweise eingesetzten Mengen und Beispiele für geeignete Additive sind beispielsweise dem Gächter-Müller, Kunststoffadditive, Carl-Hanser Verlag zu entnehmen. Bevorzugt werden diese Additive in die Deckschicht eingearbeitet.

Herstellung von Verbundfolien mit strukturierter Oberfläche:

Für die Herstellung der aus den gerade beschriebenen Materialien aufgebauten Verbundfolien mit strukturierter Oberfläche bestehen verschiedene Möglichkeiten:

1.) Durch Extrusion über Breitschlitzdüsen oder Ringdüsen werden Monofolien oder mehrschichtige Verbundfolien hergestellt. Diese planebenen Folien werden anschließend unter Anwendung von Wärme und Druck derart verformt, daß eine Oberfläche der Folie planeben ist und die andere Oberfläche die erfindungsgemäßen, sich periodisch wiederholenden, wulstartigen Verdickungen aufweist. Diese Verformung ist mittels einer auf die Folie gelegten Maske oder einer aufgelegten profilierten Platte unter Verwendung einer Presse oder einer Walze möglich. Bevorzugt ist der Einsatz von Walzen, da so eine kontinuierliche Fertigung der strukturierten Folie möglich ist. Selbstverständlich ist es auch möglich, Pressen mit profilierter Platte, bevorzugt mit auswechselbarer, oberflächenstrukturierter Pressplatte und Walzen mit - bevorzugt auswechselbarer - strukturierter Oberfläche einzusetzen. Bevorzugt ist es außerdem, wenn die Presse bzw. die Walze temperierbar, vorzugsweise heizbar ist, um die Folie bei der erforderlichen Temperatur zu verformen. Die bei der Verformung angewandte Temperatur hängt selbstverständlich vom Anpreßdruck der Walze bzw. Presse ab und liegt i.a. zwischen 50°C und der Schmelztemperatur der Folie, wobei die Temperatur um so höher ist, je niedriger der Druck ist. Der Anpreßdruck liegt i.a. zwischen 1 und 400 bar.

Eine derartig strukturierte Folie wird anschließend mit einem Haftvermittler oder einem coextrudierten, schichtförmigen Polymerverbund mit gleichem oder verschiedenem Haftvermittler an den beiden Oberflächen. des Polymerverbundes in Form eines Filmes oder einer Schmelze beschichtet. Dabei wird eine Temperatur gewählt, bei der der Haftvermittler eine feste und stabile Verbindung mit der strukturierten Mono- und Verbundfolie eingeht, ohne daß die strukturierte Folie aufschmilzt oder die aufgeprägte Struktur verliert.

2.) Analog zu dem gerade beschriebenen Verfahren ist es auch möglich, eine planebene Mono- oder Verbundfolie durch eine Presse oder durch Walzen derart zu verformen, daß eine Oberfläche die erfindungsgemäßen, sich periodisch wiederholenden, wulstartigen Verdickungen aufweist (Positivform), während die andere Oberfläche das entsprechende geometrische Muster in Negativform, d.h.in Form von Vertiefungen aufweist. Diese strukturierte Folie wird dann analog zu Verfahren 1 ebenfalls auf der Negativseite mit einem Haftvermittler beschichtet, so daß die aufgeprägte Struktur (Positivseite) erhalten bleibt.

3. Neben den mehrstufigen Verfahren 1 und 2 kann die thermoplastische Verbundfolie auch dadurch hergestellt werden, daß ein (im Falle einer Monofolie) oder mehrere Polymere (im Falle von mehrschichtigen Verbundfolien) mittels eines bzw. mehrerer Extruder durch eine Breitschlitzdüse, eine dualslit Düse oder eine feedbloc Düse direkt auf eine thermostatisierbare Walze mit bevorzugt auswechselbarer - strukturier-ter Oberfläche extrudiert und so direkt eine Folie mit strukturierter Oberfläche erzeugt wird. Anschließend erfolgt Auflaminieren, kaschieren oder Beschichten mit-einem Haftvermittlerfilm, einer Haftvermittlerschmelze oder einem gegebenenfalls schmelzeflüssigen, schichtförmigen Polymerverbundfilm, wobei darauf zu achten ist, daß die Oberflächenstruktur der thermoplastischen Schicht erhalten bleibt. Dieses Aufbringen der Haftvermittlerschicht kann entweder auf die schmelzeflüssige, geglättete, der strukturierten Oberfläche abgewandten Oberfläche der thermoplastischen Deckschicht im Bereich der oberflächenstrukturierten Walze oder auf die geglättete, erkaltete Oberfläche der Deckschicht erfolgen. Es resultieren thermoplastische Verbundfolien, die denen nach dem Verfahren 1 hergestellten Folien entsprechen.

4. Die thermoplastische Verbundfolie mit strukturierter Oberfläche kann auch dadurch hergestellt werden, daß die thermoplastische Deckschicht zusammen mit der Haftvermittlerschicht über Breitschlitzdüsen oder Ringdüsen coextrudiert wird. Die so erhaltene, planebene thermoplastische Verbundfolie wird dann mit Hilfe der bei Verfahren 1 beschriebenen Vorrichtungen derart verformt, daß eine Oberfläche planeben ist und die andere Oberfläche die erfindungsgemäßen, sich periodisch wiederholenden wulstartigen Verdickungen aufweist.

5. Es ist aber auch möglich, eine planebene thermoplastische Monofolie oder ein Verbund mit einer Haftvermittlerschicht oder einem Polymerverbund, bei dem mindestens eine Oberfläche aus einer Haftvermittlerschicht besteht, zu verbinden und die so erhaltene, planebene thermoplastische Verbundfolie analog Verfahren 4 derart umzuformen, daß eine Oberfläche planeben ist und die andere Oberfläche die erfindungsgemäßen, sich periodisch wiederholenden wulstartigen Verdickungen aufweist.

Thermoplastische Verbundfolien mit strukturierter Oberfläche, bei denen mindestens eine Schicht aus einem geschäumten Kunststoff besteht

In dem erfindungsgemäßen Verfahren einsetzbar sind auch thermoplastische Verbundfolien mit strukturierter Oberfläche, bei denen mindestens eine Schicht aus einem geschäumten Kunststoff besteht. Derartige Verbundfolien sind beispielsweise durch die folgenden Verfahren herstellbar:

I. In einem Extruder wird ein Polymer in Gegenwart eines chemischen (thermisch zerfallende Verbindung wie z.B. Azodicarbonamid, Natriumdicarbonat) oder eines physikalischen Treibmittels (Treibgases wie z.B. Freon Koh lendioxid, Butan) aufgeschmolzen und auf eine temperierte Walze mit - bevorzugt auswechselbarer strukturierter Oberfläche extrudiert. Die nichtstrukturierte Oberfläche des Schaumfilms wird, falls notwendig, mit einem Rakel oder einer Walze geglättet und dann ein Haftvermittlerfilm oder eine Haftvermittlerfolie oder eine Polymerverbundfolie bzw. -film, die (der) auf mindestens einer Oberfläche eine Haftvermittlerschicht hat, auf den Polymerfilm kaschiert oder extrudiert.

II. a) Analog zu Verfahren I wird in einem Extruder ein Polymer in Gegenwart eines chemischen oder physikalischen Treibmittels aufgeschmolzen und auf eine glatte Walze extrudiert und anschließend, nach ggf. erfolgtem Glätten der Oberfläche, analog zu Verfahren I mit einer Haftvermittlerschicht oder einer Polymerverbundfolie beschichtet.

Diese unstrukturierte, planebene Verbundfolie wird nun, wie bei dem Verfahren 1 der Folienherstellung beschrieben, zwischen ein- oder beidseitig beheizten Pressen oder Walzen zu einem Verbund mit wulstartigen Verdickungen auf der geschäumten Oberflächenschicht umgeformt.

II. b) Eine Verbundfolie mit mindestens einer Oberfläche aus einem Haftvermittler oder eine Haftvermittlerfolie wird mit aufschäumendem Polymerfilm beschichtet. Die geschäumte Oberflächenschicht wird wie in II a) beschrieben in Pressen oder Walzen umgeformt.

II. c) Eine coextrudierte Verbundfolie mit einer geschäumten Oberflächenschicht und einem Haftvermittler als zweite Oberfläche wird zwischen ein- oder beidseitig beheizten Pressen oder Walzen zu einem Verbund mit wulstartigen Verdickungen auf der geschäumten Oberflächenschicht umgeformt.

III. Es wird eine Verbundfolie, die der nach Verfahren II hergestellten Verbundfolie entspricht, dadurch herge stellt, daß eine planebene thermoplastische geschäumte Monofolie oder Verbundfolie mit mindestens einer geschäumten Oberflächenschicht zuerst zu einer Folie mit den erfindungsgemäßen wulstartigen Verdickungen auf der geschäumten Oberflächenschicht zwischen temperierten Walzen (z.B. Prägewerk) mit beid- oder einseitig strukturierter Oberfläche umgeformt wird und dann die Haftvermittlerschicht bzw. ein Verbund mit mindestens einer Haftvermittlerschicht an der Oberfläche so auf die nichtstrukturierte Oberfläche aufgebracht wird, daß die strukturierte Oberfläche erhalten bleibt.

IV. Die Vertiefungen einer temperierbaren Walze (W) werden mit einem aufschäumenden Harz gefüllt und überschüssiges Material durch einen Rakel oder eine Walze entfernt. Direkt danach wird eine vorgewärmte Kaschierfolie oder ein Schmelzfilm aus entweder einem Haftvermittler oder aus einem coextrudierten Polymerverbund mit einer Haftvermittlerschicht auf mindestens einer seiner Oberflächen durch eine Walze angepreßt. Der Verbund wird nach einer Teilumschlingung der Walze (W) im Bereich von 40 bis 90 % des Umfangs der Walze (W) abgezogen.

Herstellung von Metall-Kunststoff-Verbunden mit strukturierter Oberfläche

Das Metallblech wird mit der beschriebenen thermoplastischen Verbundfolie mit strukturierter Oberfläche derart bedeckt, daß die Haftvermittlerschicht des Verbundes die Metalloberfläche berührt. Durch Anwendung von Druck und Wärme wird entweder mittels einer temperierbaren Presse oder im Walzenspalt eines Walzwerkes oder Kalanders mittels temperierbarer Walzen der Metall-Kunst- stoff-Verbund hergestellt. Der Druck und die Temperatur sind dabei so zu wählen, daß einerseits der Haftvermittler eine feste und stabile Verbindung mit der Metallfolie bzw. dem Metallblech eingeht und daß andererseits die thermoplastische Deckschicht nicht aufschmilzt oder die aufgeprägte Struktur verliert.

Neben diesem Verfahren zur Herstellung der Metall-Kunststoff-Verbunde mit strukturierter Oberfläche besteht aber auch die Möglichkeit, zunächst einen Verbund aus einem Metallblech und einer planebenen thermoplastischen Verbundfolie herzustellen und diesen Metall-Kunststoff-Verbund derart umzuformen, daß die aus dem thermoplastischen Kunststoff bestehende Deckschicht wulstartige Verdickungen aufweist, die ein sich sowohl in der Quer- als auch in der Längsrichtung wiederholendes geometrisches Muster bilden.

Schließlich ist es auch möglich, die thermoplastische Verbundfolie direkt auf das Metallblech zu coextrudieren und im Anschluß an die Coextrusion direkt den erhaltenen Verbund so zu verformen, daß die aus dem thermoplastischen Kunststoff bestehende Deckschicht wulstartige Verdickungen aufweist, die ein sich sowohl in der Quer- als auch in der Längsrichtung wiederholendes geometrisches Muster bilden.

Die zur Verformung der Metall-Kunststoff-Verbunde verwendeten Vorrichtungen sind identisch mit den Vorrichtungen zur Herstellung der Verbundfolie mit profilierter Oberfläche. Es wird daher hier nur auf die entsprechenden Stellen der vorliegenden Beschreibung verwiesen.

Außerdem können die Dichtungsmassen auch in Form von Laminaten auf die beschichteten, aber noch nicht zu Verschlußteilen verformten Metallbleche aufgebracht werden.

Auch bei diesen Herstellmethoden der erfindungsgemäßen beschichteten Metallbleche kann die Deckschicht aus einem geschäumten Polymer bestehen.

Die Beschichtung des Metallblechs bzw. die thermoplastische Verbundfolie weist im allgemeinen eine Gesamttrockenfilmstärke (ohne Verdickungen) von weniger als 500 µm, bevorzugt 10 bis 200 µm und besonders bevorzugt von weniger als 100 µm auf. Die Stärke der Haftvermittlerschicht liegt dabei im Falle der Verbundfolien zwischen 0,5 und 100 µm. Die Stärke der Deckschicht ergibt sich entsprechend zu Werten zwischen 10 und 499,5 µm. Wie bereits erwähnt, sind thermoplastische Verbundfolien einsetzbar, die nur aus einer Haftvermittler- und einer Deckschicht bestehen, es sind aber auch Verbundfolien aus mehreren Schichten einsetzbar. In diesem Fall können sowohl die verschiedenen Haftvermittlerschichten als auch die verschiedenen thermoplastischen Schichten aus jeweils gleichem oder aber verschiedenem Material in gleicher oder unterschiedlicher Schichtdicke bestehen.

Die erfindungswesentlichen wulstartigen Verdickungen des beschichteten Metallblechs sind ring- oder scheibenförmig mit regelmäßiger oder unregelmäßiger Umfangslinie und haben eine Dicke von mindestens 2 µm, bevorzugt mindestens 5 µm und ganz besonders bevorzugt Dicken von mindestens 50 µm zur Erzielung guter Dichtungseigenschaften. Der Innenwinkel der Flanke zur Folienbahn beträgt 1 bis 90°, bevorzugt 3 bis 85°. Die Breite der ringförmigen wulstartigen Verdickungen schwankt je nach Einsatzzweck der beschichteten Metallbleche im allgemeinen zwischen 1 und 20 mm und liegt bevorzugt zwischen 2 und 10 mm.

Abschließend sei noch darauf hingewiesen, daß es auch möglich ist, das Metallblech an der dem Füllgut abgewandten Seite ebenfalls mit einer bevorzugt planebenen, thermoplastischen Verbundfolie oder aber mit einem flüssigen oder pulverförmigen Beschichtungsmittel zu beschichten.

Verwendung der beschichteten Metallbleche zur Herstellung von Verpackungsbehältern

Die erfindungsgemäßen beschichteten Metallbleche werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600 - 606: W. Panknin, A. Breuer, M. Sodeik, "Abstreckziehen als Verfahren zum Herstellen von Dosen aus Weißblech"; SHEET METAL INDUSTRIES, August 1976: W. Panknin, Ch. Schneider, M. Sodeik, "Plastic Deformation of Tinplate in Can Manufacturing"; Verpackungs-Rundschau, Heft 4/1971, Seiten 450-458: M. Sodeik, I. Siewert, "Die nahtlose Dose aus Weißblech"; Verpackungs-Rundschau, Heft 11/1975, Seiten 1402 bis 1407: M. Sodeik, K. Haaß, I. Siewert, "Herstellen von Dosen aus Weißblech durch Tiefziehen"; Arbeitsmappe für den Verpackungspraktiker, Metalle, Teil II, Gruppe 2, Weißblech, Lfd. Nr. 220.042 bis 220.048 in neue Verpackung 12/87, Seite B 244 bis B 246 und neue verpackung 1/88, Seiten B 247 bis B 250).

Bezüglich näherer Einzelheiten wird daher auf die Literatur verwiesen.

Die Erfindung wird nun anhand von Zeichnungen näher erläutert.

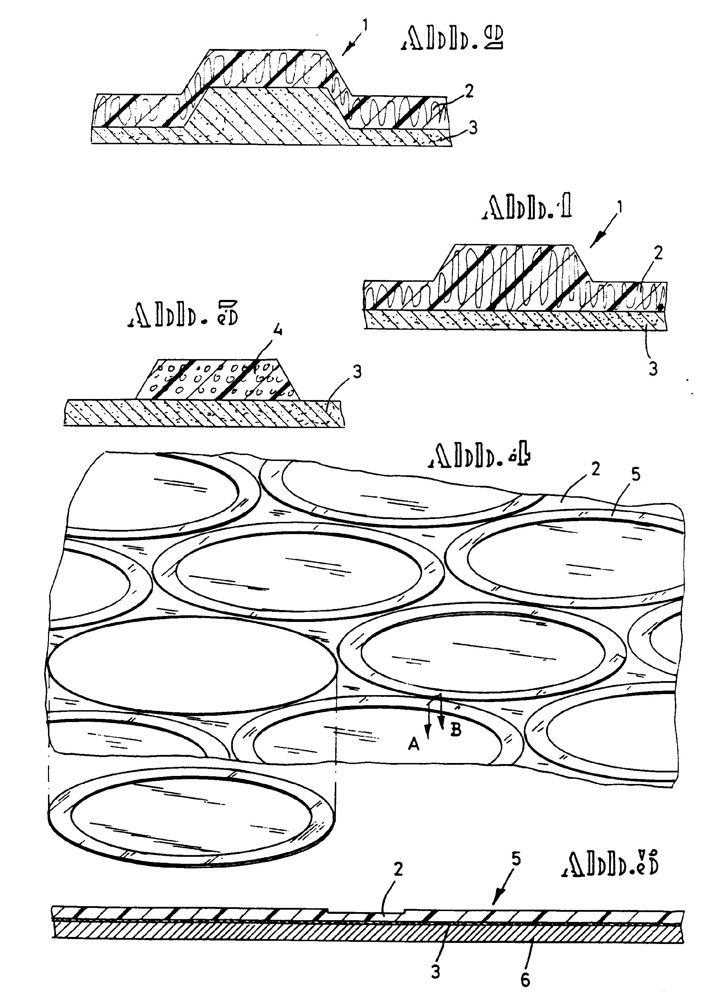

Fig. 1 zeigt einen Ausschnitt einer strukturierten thermoplastischen Verbundfolie (1) aus einer thermoplastischen Deckschicht (2) und einer Haftvermittlerschicht (3), bei der die thermoplastische Deckschicht (2) die wulstförmigen Verdickungen aufweist. Eine derartige Verbundfolie ist herstellbar durch das in der vorliegenden Beschreibung erläuterte Verfahren 1.

Fig. 2 zeigt einen Ausschnitt einer strukturierten thermoplastischen Verbundfolie (1) aus einer thermoplastischen Deckschicht (2) und einer Haftvermittlerschicht (3), bei der die Haftvermittlerschicht (3) die wulstförmigen Verdickungen aufweist. Eine derartige Verbundfolie ist herstellbar durch das in der vorliegenden Beschreibung erläuterte Verfahren 2.

Fig. 3 zeigt einen Ausschnitt einer strukturierten thermoplastischen Verbundfolie (1) aus einer Haftvermittlerschicht (3) und einer thermoplastischen Deckschicht (4) aus geschäumtem Kunststoff. Eine derartige Verbundfolie ist herstellbar durch das in der vorliegenden Beschreibung erläuterte Verfahren IV.

Fig. 4 zeigt einen Ausschnitt eines beschichteten Metallblechs mit wulstartigen Verdickungen (5) der Deckschicht (2) in Ringform in perspektivischer Darstellung. Weiterhin ist ein zur Herstellung eines Verschlußteils erforderlicher, aus dem Metallblech ausgestanzter Teil dargestellt.

Fig. 5 zeigt einen Schnitt entlang der Linie A - B. Zu sehen sind das Metallblech (6), die Haftvermittlerschicht (3) und die Deckschicht (2) mit den wulstförmigen Verdickungen (5).

In der Fig. 4 und der Fig. 5 wurden für das beschichtete Metallblech folgende typische Parameter zugrunde gelegt:

```
Höhe der Verdickungen          = 0,05 mm
Breite der Verdickungen        = 4 mm
Dicke der Verbundfolie         = 0,1 mm
Blechdicke                     = 0,2 mm
Deckeldurchmesser              = 73 mm
Abstand von 2 benachbarten Verdickungen = 1 mm.
```

Im folgenden wird die Erfindung anhand von Ausführungsbeispielen näher erläutert. Alle Angaben über Teile und Prozentsätze sind Gewichtsangaben, falls nicht ausdrücklich etwas anderes festgestellt wird.

I. Herstellung von thermoplastischen Verbundfolien

I.1. Herstellung der thermoplastischen Verbundfolie 1

Ein coextrudierter Film aus einer 0,20 mm starken Schicht eines Polyethylens hoher Dichte (Dichte = 0,960 g/cm³, Schmelzindex, gemessen bei 190°C und einer Belastung von 2,16 kg (kurz MFI 190/2,16) = 8 g/10 min, Schmelzpunkt 135°C) und einer 0,05 mm starken Schicht eines Ethylenacrylsäurecopolymeren (Dichte = 0.931 g/cm³, MFI 190/2,16 = 6 g/10 min, 6,5 Gew.-% Arcylsäure) wird in einem beheizten Prägewerk verformt. Die Prägewalze ist auf eine Temperatur von 5 bis 20°C unterhalb des Schmelzpunktes des Polyethylens erwärmt, die glatte Andruckwalze bis auf 40°C unterhalb der Temperatur der Prägewalze. Die Prägewalze wird bis zu 80 % ihres Umfanges von dem coextrudierten Film umschlungen, um einen optimalen Wärmeübergang zu ermöglichen. Die Anpreßwalze weist eine Teflon- oder gummibeschichtete Oberfläche auf, um Verklebungen zu vermeiden. Die Prägewalze weist ringförmige Vertiefungen (0,05 mm Tiefe, 5 mm Breite) auf. Die Anpreßkraft liegt bei 200 N/mm Spaltlänge.

I.2. Herstellung der thermoplastischen Verbundfolie 2

Eine geprägte Polyamidfolie (Polyamid 6, 0,06 mm Foliendicke) mit einseitig erhabenen ringförmigen Strukturen (0,06 mm Höhe) wird in einer Beschichtungsanlage auf der diesem Profil abgewandten Seite mit Ethylenacrylsäurecopolymer (Dichte = 0,938 g/cm³, MFI 190/2,16 = 10 g/10 min, 10 Gew.-% Acrylsäure beschichtet.

Massetemperatur: 180°C, Beschichtungsgeschwindigkeit 150 m/min, Temperatur der Chill-roll 5°C, Dicke der Schicht 0,1 mm.

I.3. Herstellung der thermoplastischen Verbundfolie 3

Eine geprägte Polyamidfolie (Polyamid 6, 0,06 mm Dicke) mit einseitig erhabenen ringförmigen Strukturen (0,02 mm Höhe) wird in einer Beschichtungsanlage auf der diesem Profil abgewandten Seite mit einem coextrudierten Polymerfilm aus 0.02 mm Zn-Ionomer (Dichte = 0.940 g/cm³, MFI 190/2.16 = 2 g/10 min, 1,7 Gew.-% Zn-Acrylat und 6,8 Gew.-% Acrylsäure), 0,06 mm LDPE - low density polyethylen - (Dichte = 0.934 g/cm³, MFI 190/2.16 = 0.3 g/10 min) und 0.03 mm Zn-Ionomer beschichtet.

Massetemperatur 170 °C, Beschichtungsgeschwindigkeit 100 m/min, Temperatur der Chillroll 5 °C, Dicke der Schicht 0.11 mm.

### I.4 Herstellung der thermoplastischen Verbundfolien 4-6

HDPE - high density polyethylen - (Dichte 0,952 g/cm³, MFI 190/2,16 = 6 g/10 min), gepfropftes LLDPE - linear low density polyethylen - (Dichte 0.920 g/cm³, MFI 190/2,16 = 4 g/10 min, 0,3 Gew % Maleinsäureanhydrid) und Ethylenvinylalkoholcopolymer (Dichte 1.19 g/cm³, MFI 190/2.16 = 1.3 g/10 min, 30 Mol % Ethylen) werden mittels Feedblockdüse zu einer oberflächenstrukturierten Verbundfolie coextrudiert. Die HDPE-Schicht des Verbundes wird durch Extrusion der Schmelze (290 °C, 150 m/min) auf eine Chillroll (15 °C) mit abnehmbaren Oberflächenteilen strukturiert. Die abnehmbaren Teile sind 2 mm dicke, verchromte Halbschalen in die kreisringförmige Vertiefungen (Breite 7 mm und 3 mm, Tiefe bei Folie 4 0,15 mm, bei Folie 5 0,1 mm und bei Folie 6 0,01 mm) durch Funkenerosion vor der Verchromung eingebracht wurden. Der Verbund setzt sich aus 0.1 mm HDPE, 0.02 mm g-LLDPE, 0,05 mm Ethylenvinylalkoholcopolymer und 0.03 mm g-LLDPE zusammen.

### I.5. Herstellung der thermoplastischen Verbundfolie 7

Ein Polypropylen der Dichte 0.908 g/cm³ und dem Schmelzindex MFI 230/2,16 = 11 g/10 min wird in einem Einschneckenextruder (∅=45 mm, Länge der Schnecke L = 30 D (D=∅), Massetemperatur 290 °C) aufgeschmolzen und auf einen Chillroll-Zylinder (Oberflächentemperatur 15 °C) extrudiert. Auf der Oberfläche der Chill-roll wurde ein 2,5 mm dicker Teflonfilm befestigt, der ringförmige Vertiefungen (0,05 mm Tiefe und 5 mm Breite) aufweist. Der auf diese Oberfläche extrudierte Polypropylenfilm (Dicke 0,15 mm) wird durch eine Anpreßwalze geglättet und nach einer halben Umschlingung des Zylinders abgezogen. Durch technisch bekannte Verfahren (elektrische Entladung, Corona- und Plasmabehandlung, Beflammung) wird die ebene Oberfläche des strukturierten Films vorbehandelt, so daß eine Oberflächenspannung von 45 bis 65 m N/m vorliegt.

Dieser Polypropylenfilm mit strukturierter Oberfläche wird mit einem coextrudierten Film (0,05 mm Dicke) aus einem Ethylenvinylacetat-Copolymer (28 Gew.-% Vinylacetat, MFI 190/2,16 = 20 g/10 min, 0,01 mm Dicke) und einem Ethylenacrylsäurecopolymer (8 Gew.-% Acrylsäure, MFI 190/2,16 = 17 g/10 min, 0,04 mm Dicke) beschichtet, so daß die Ethylenvinylacetat-Copolymerschicht auf dem Polypropylenfilm angeordnet ist. Die Massetemperatur beträgt 205°C, die Beschichtungsgeschwindigkeit 100 m/min.

### I.6. Herstellung der thermoplastischen Verbundfolie 8

Es wird analog zur Verbundfolie 7 eine thermoplastische Verbundfolie 8 hergestellt, mit dem einzigen Unterschied zur Herstellung der Verbundfolie 7, daß jetzt die ringförmigen Vertiefungen des Teflonfilms der Chillroll 0,03 mm Tiefe haben (statt 0,05 mm).

### I.7. Herstellung der thermoplastischen Verbundfolie 9

Es wird analog zur Verbundfolie 7 eine thermoplastische Verbundfolie 9 hergestellt, mit dem einzigen Unterschied, daß jetzt die ringförmigen Vertiefungen des Teflonfilms der Chillroll 0,005 mm Tiefe haben statt 0,05 mm.

### I.8. Herstellung der thermoplastischen Verbundfolie 10

Ein Polypropylen (Dichte = 0.898 g/cm³, MFI 230/2.16 = 5 g/10 min) wird zusammen mit einem gepfropften Random Polypropylen (Dichte = 0.89 g/cm³, MFI 230/2.16 = 12 g/10 min, Schmelzpunkt 158 °C, 0,21 Gew % Maleinsäureanhydrid) auf eine Chillroll mit darauf befestigter Teflonfolie (2 mm Dicke, ringförmige Vertiefung 0,1 mm, 5 mm Breite, ∅ innen 73 mm) coextrudiert. Bei einer Massetemperatur von 250 °C und einer Geschwindigkeit von 120 m/min werden die Vertiefungen ausgefüllt und eine Verbundfolie von 0.24 mm Dicke (0.2 mm Polypropylen, 0.04 mm Pfropfcopolymer) mit 0.08 mm hohen wulstförmigen Verdickungen auf der Polypropylen-Seite erhalten.

### I.9. Herstellung der thermoplastischen Verbundfolie 11

Die Pfropfcopolymerseite der Verbundfolie 10 wird mit einer 0.05 mm dicken Schicht eines Copolymeren (87 % Ethylen, 9 % Butylacrylat, 4 % Acrylsäure, MFI 190/2.16 = 7 g/10 min) bei einer Massetemperatur von 270 °C beschichtet.

### I.10. Herstellung der thermoplastischen Verbundfolie 12

Ein Polyesterfilm (Handelsprodukt Melinex[R] 870 der Firma ICI) mit 0,012 mm Dicke wird in einem beheizten Tiefziehwerkzeug (T = 150 °C) mit ringförmigen Strukturen (0.04 mm Tiefe, außen $\varnothing$ 11.57 cm, innen $\varnothing$ 10.57 cm) versehen. Dieser Film wird mit gepfropftem PE-LLD (linear low density polyethylen-Dichte: 0.918 g/cm$^3$, MFI 190/2.16 = 4 g/10 min, 0.27 Gew-% Maleinsäureanhydrid) beschichtet. Massetemperatur 290°C, Auftragsstärke 50 g/m$^2$.

### Beispiel 1

Ein Polyethylen (PE) mit der Dichte 0.918 g/cm$^3$ und einem Schmelzindex (MFI 190/2.16) von 1.7 g/10 min wird in einem Extruder ($\varnothing$ 60, L = 25 D) aufgeschmolzen. Die Massetemperatur beträgt 220 °C. In einem zweiten Extruder ($\varnothing$ 35, L = 25 D) wird ein Ethylenacrylsäurecopolymer (8 Gew % Acrylsäure, Dichte = 0.935 g/cm$^3$, MFI 190/2.16 = 7 g/10 min) bei einer Temperatur von 210 °C aufgeschmolzen. Beide Schmelzeströme werden in der Feedblockdüse zusammengeführt und auf eine glatte Chillroll (Temperatur 15 °C) extrudiert. Der 0,2 mm dicke Film besteht aus 0.15 mm Polyethylen und 0.05 mm Copolymer. Dieser Film wird in einem zweiten Arbeitsschritt mit der Copolymerseite auf ein entfettetes Stahlblech (0.3 mm ECCS, electrolytic chromium coated steel, verchromter Stahl) gelegt. Auf die Polyethylen-Seite wird eine mit ringförmigen Vertiefungen versehene Teflonfolie (2 mm Dicke) gelegt. Die Ringe haben einen Durchmesser innen 54 mm und 59 mm außen mit unterschiedlichen Tiefen von 0.003, 0.01, 0.05 und 0.1 mm. Unter schwachem Druck von < 0.5 kg/cm$^2$ wird 1 min bei 200 °C vorgepreßt, dann 3 min bei einem Druck von 5 kg/cm$^2$ und anschließend unter Druck auf Raumtemperatur abgekühlt. Die ringförmigen Vertiefungen werden vollständig ausgefüllt. Im Schältest in Anlehnung an ASTM D 1876 (Winkel 90°C) ergibt sich eine Haftung von 45 N/15 mm Streifenbreite (vgl. Tabelle 1). Die Haftungen der Haftvermittlerschicht auf anderen Untergründen ist in Tabelle 2 dargestellt.

### Beispiel 2

Es wird nach dem in Beispiel 1 beschriebenen Verfahren ein beschichtetes Stahlblech hergestellt, wobei allerdings im Unterschied zu Beispiel 1 nun Polyethylen mit der Dichte = 0.924 g/cm$^3$ und dem Schmelzindex MFI 190/2.16 = 7 g/10 min und Ethylenacrylsäurecopolymer mit der Dichte = 0,932 g/cm$^3$ und dem Schmelzindex MFI 190/2.16 = 7 g/10 min und einem Gehalt von 4 Gew % Acrylsäure und 8 Gew % Butylacrylat eingesetzt wird. Die Dickenverteilung der Verbundfolie ist 0,20 mm Polyethylen zu 0,05 mm Copolymer. Das Copolymer haftet auf 0,2 mm Weißblech E 5,6/5,6 mit 69 N/15 mm. Die Ergebnisse weiterer Haftungsprüfungen der Haftvermittlerschicht auf anderen Untergründen sind in Tabelle 2 dargestellt.

### Beispiel 3

Eine unstrukturierte coextrudierte Folie aus einem LDPE Polyethylen niedriger Dichte (Dichte = 0.918 g/cm$^3$, MFI 190/2.16 = 7 g/10 min Dicke 0,1 mm) und einem Ethylencopolymeren (Dichte = 0,940 g/cm$^3$, MFI 190/2.16 = 11 g/10 min, 16 Gew % Vinylacetat, 0,6 Gew % Maleinsäureanhydrid, 0,02 mm Dicke) wird in einem beheizten Prägewerk bei einer Andruckkraft von 100 N/mm und einer Geschwindigkeit von 10 m/min mit einem vorgeheizten Weißblechband unter gleichzeitiger Prägung der LDPE-Schicht verbunden. Die Prägewalze weist regelmäßige kreisringförmige Vertiefungen von 5 mm Breite und 0.01 mm Tiefe auf. Die Temperatur der Vorwärmwalze der Folie liegt bei 80 °C, die der Prägewalze und Andruckwalze bei 15 °C. Die Blechbahn ist auf 150 °C vorgewärmt. Die Ergebnisse von Haftungsprüfungen sind in Tabelle 1 und 2 dargestellt.

### Beispiel 4

Polyethylenglycolterephthalat (Dichte 1.41 g/cm$^3$, Schmelzpunkt: 255 °C, Glastemperatur: 75 °C) wird zusammen mit einem Ethylenvinylacetat-Maleinsäureanhydrid Terpolymer (8 Gew % Vinylacetat, 3 Gew % Maleinsäureanhydrid, MFI 190/2.16 = 6 g/10 min) bei 270 °C coextrudiert. Der Verbund besteht aus 0.01 mm Polyester und 0.07 mm Terpolymer. Dieser Film wird in einem zweiten Arbeitsschritt mit der Copolymerseite auf ein entfettetes Stahlblech (0.2 mm TFS) gelegt. Auf die Polyester-Seite wird eine mit ringförmigen Vertiefungen versehene Stahlplatte (0,2 mm Dicke) gelegt. Die Ringe haben einen Durchmesser innen 25 mm und 32 mm außen mit unterschiedlichen Tiefen von 0,01 und 0,05 mm. Unter schwachem Druck von < 0.5 kg/cm² wird 1 min bei 250 °C vorgepreßt, dann 3 min bei einem Druck von 5 kg/cm² und anschließend unter Druck auf Raumtemperatur abgekühlt. Die ringförmigen Vertiefungen werden vollständig ausgefüllt. Die Ergebnisse verschiedener Haftungsprüfungen sind in Tabelle 1 und 2 dargestellt.

Beispiele 5 bis 15 (Verfahren a)

Ein 35 cm breites Metallband wird auf eine Temperatur zwischen Schmelztemperatur des Haftvermittlers und 250 °C (jeweilige Temperaturen vgl. auch Tabellen 1 und 2) durch geeignete Methoden (HF-Erwärmung, Gasflammen, etc.) erhitzt, mit der Haftvermittlerseite einer 35 cm breiten Teilbahn der Verbundfolien 1 bis 11 belegt und zwischen den Walzen eines Prägewerkes zu einem Metall-Kunststoff-Laminat verbunden. Die Andruckwalze ist gummiert und die Anpreßkraft (< 50 N Anpreßkraft pro mm Spaltlänge) so gewählt, daß die Verminderung der Höhe der Strukturen weniger als 10 % der ursprünglichen Höhe beträgt. Von einigen ausgewählten Verbunden wurde ein Schältest in Anlehnung an ASTM D 1876 durchgeführt.
Die Prüfergebnisse sind in Tabelle 1 und 2 dargestellt.

Beispiele 16 bis 26 (Verfahren b)

Ein 35 cm breites Metallband wird mit der Haftvermittlerseite einer 35 cm breiten Teilbahn der Verbundfolien 1 bis 11 belegt, die Metallseite durch geeignete Methoden (HF-Erwärmung, Gasflammen, etc.) auf eine Temperatur größer als der Schmelzpunkt des Haftvermittlers (jeweilige Temperaturen vgl. Tabelle 1) erhitzt und dieses Laminat zwischen einer glatten Metallwalze und einer Gummiwalze (strukturierte Polymerseite) eines Prägewerkes zu einem Metall-Kunststoff-Laminat verpreßt. Die Andruckkraft wird so eingestellt, daß die Verringerung der Höhe der Strukturen weniger als 10 % der ursprünglichen Höhe beträgt. Von einigen ausgewählten Verbunden wurde ebenfalls ein Schältest in Anlehnung an ASTM D 1876 durchgeführt. Die Prüfergebnisse sind in Tabelle 1 und 2 dargestellt.

Beispiel 27 bis 37 (Verfahren c)

Ein 35 cm breites Metallband wird auf eine Temperatur < 300 °C (jeweilige Temperatur vgl. Tabelle 1) durch geeignete Methoden (HF-Erwärmung, Gasflammen, etc.) erhitzt und im Walzenspalt eines Prägewerkes mit der Haftvermittlerseite einer der Verbundfolien 1 bis 11 zu einem Metall-Kunststoff Laminat verbunden. Die Andruckwalze ist gummiert und die Anpreßkraft (< 100 N Anpreßkraft pro mm Spaltlänge) so gewählt, daß die Verminderung der Höhe der Strukturen weniger als 10 % der ursprünglichen Höhe beträgt. Von einigen ausgewählten Verbunden wurde ebenfalls ein Schältest in Anlehnung an ASTM D 1876 durchgeführt. Die Prüfergeb- nisse sind in Tabelle 1 und 2 dargestellt.

Beispiel 38

Unter Verwendung der thermoplastischen Verbundfolie 12 werden beschichtete Metallbleche hergestellt, indem Verfahren b angewandt wird. Von einigen Verbunden wurde ebenfalls ein Schältest in Anlehnung an ASTM 1876 durchgeführt. Die Prüfergebnisse sind in Tabelle 1 und 2 dargestellt.

## Tabelle 1:

Ergebnisse der Schältests in Anlehnung an ASTM D 1876 zur Prüfung der Haftung der Verbundfolie auf Metallblechen

| Beispiel | Verbund-folie | Verfahren 1) | $T (°C)^2$ | Metall | Dicke Metall(mm) | Haft-festigkeit (N/15 mm) |
|---|---|---|---|---|---|---|
| 1 | – | – | – | TFS-ECCS[3] | 0,30 | 45 |
| 2 | – | – | – | Weißblech[4] | 0,20 | 69 |
| 3 | – | – | – | Weißblech[4] | 0,20 | 7,8 |
| 4 | – | – | – | | | |
| 5 | 1 | a | 180 | Weißblech[4] | 0,35 | 7,5 |
| 17 | 2 | b | 210 | Weißblech[4] | 0,25 | 10,4 |
| 29 | 3 | c | 200 | Schwarzblech | 0,50 | 4,1 |
| 19 | 4 | b | 210 | ECCS[3] | 0,28 | 8,0 |

EP 0 490 949 B1

| Beispiel | Verbund-folie | Verfahren 1) | T (°C)[2] | Metall | Dicke Metall(mm) | Haft-festigkeit (N/15 mm) |
|---|---|---|---|---|---|---|
| 20 | 5 | b | 210 | ECCS[3] | 0,28 | 9,0 |
| 21 | 6 | b | 210 | ECCS[3] | 0,28 | 8,5 |
| 33 | 7 | c | 180 | Weißblech[4] | 0,21 | 11,5 |
| 34 | 8 | c | 180 | Weißblech[4] | 0,21 | 11,0 |
| 35 | 9 | c | 180 | Weißblech[4] | 0,21 | 11,5 |
| 15 | 10 | a | 220 | Weißblech[4] | 0,18 | 4,5 |
| 37 | 11 | c | 170 | Weißblech[4] | 0,20 | 9,1 |
| 38 | 12 | b | 250 | Aluminium | 0,28 | 7,0 |

Erläuterungen zu Tabelle 1:

1) Zur Herstellung des Verbundes aus Metallblech und thermoplastischer Verbundfolie angewandtes Verfahren

2) Oberflächentemperatur des Metallblechs bei der Herstellung des Verbundes aus Metallblech und ther-

13

moplastischer Verbundfolie

3)

TFS = "tin free steel" (zinnfreier Stahl)

ECCS = "electrolytic chromium - coated steel" (verchromter Stahl)

4) Weißblech E5,6/5,6 (DIN 1616)

## Tabelle 2:

Ergebnisse der Schältests in Anlehnung an ASTM D 1876 zur Prüfung der Haftung der Haftvermittlerschicht auf verschiedenen Metallblechen

| Bei-spiel | T(°C)[3] | Haftver-mittler[2] | Comonomeren gehalt (Gew %[2]) | Schwarz-blech | TFS/ ECCS[4] | Weiß-blech | Alumi-nium |
|---|---|---|---|---|---|---|---|
| 1 | 180 | E/AA | 8 AA | 38 | 66 | 85 | 34 |
| 2 | 180 | E/BA/AA | 4 AA, 8 BA | 57 | 37 | 69 | 38 |
| 3 | 180 | E/VA/MSA | 16 VA,0,6 MSA | 27 | 49 | 79 | 22 |
| 4 | 180 | E/VA/MSA | 8 VA, 3 MSA | 24 | – | – | 27 |
| 5 | 180 | E/AA | 6,5 AA | – | – | 70 | 28 |
| 17 | 210 | E/AA | 10 AA | – | – | 83 | – |
| 29 | 200 | Ionomer | 6,8 AA, 1,7 Zn AA | 36 | 46 | 77 | 26 |
| 19 | 210 | G-PELLD | 0,3 MSA | – | 82 | 61 | 43 |

EP 0 490 949 B1

| Bei-<br>spiel | T(°C)[3] | Haftver-<br>mittler[2] | Comonomeren<br>gehalt<br>(Gew %[2]) | Schwarz-<br>blech | TFS/<br>ECCS[4] | Weiß-<br>blech | Alumi-<br>nium |
|---|---|---|---|---|---|---|---|
| 20 | 210 | G-PELLD | 0,3 MSA | – | 82 | 61 | 43 |
| 21 | 210 | G-PELLD | 0,3 MSA | – | 82 | 61 | 43 |
| 33 | 180 | E/AA | 8 AA | 35 | 60 | – | – |
| 34 | 180 | E/AA | 8 AA | 35 | 60 | – | – |
| 35 | 180 | E/AA | 8 AA | 35 | 60 | – | – |
| 15 | 220 | G-PP | 0,21 MSA | 31 | – | – | – |
| 37 | 170 | E/BA/AA | 9 BA, 4 AA | – | 39 | 74 | – |
| 38 | 250 | G-PELLD | 0,27 MSA | – | 75 | 80 | – |

Erläuterungen zu Tabelle 2:

1. Herstellung des Verbundes aus Metallblech und Haftvermittlerschicht nach dem in Beispiel 1 beschriebenen Verfahren.

2. Abkürzungen:
E = Ethylen
BA = Butylacrylat
AA = Acrylsäure
ZnAA = Zinkacrylat
g = gepfropft
PE-LLD = linear low density Polyethylen
PP = Polypropylen
VA = Vinylacetat
MSA = Maleinsäureanhydrid

3. Oberflächentemperatur des Metallblechs bei der Herstellung des Verbundes aus Metallblech und Haftvermittlerschicht.

4.
TFS = "tin free steel" (Zinnfreier Stahl)
ECCS = "Electrolytic chromium - coated steel" (verchromter Stahl)

5. Weißblech E5,6 / 5,6 (DIN 1616)

Beispiele 39 bis 42

Aus dem nach Verfahren a-c hergestellten Kunststoff-Metallverbunden der Beispiele 15, 19, 20 und 21 wurden Konservendosendeckel gestanzt und auf ihre Eignung für den Einsatz als Konservendosenmaterial im Kurztest überprüft. Die Prüfung zeigt eine gute Beständigkeit gegenüber den üblichen Testlösungen (Milchsäure, Essigsäure, Kochsalzlösung, $H_2O$) bei Sterilisationsbedingungen von 121 °C über 30 min.

Beispiele 43 bis 44

Mit den Verbunden der Beispiele 1 und 3 wurden Näpfchen mit einem Durchmesser von 33 mm und einer Höhe von 25 mm gezogen. Anschließend ließ man auf die Näpfchen Methylenchlorid einwirken. Die Haftung wurde vor Beginn und nach 72 Stunden mit Tesatest geprüft. Es wurde keine Verminderung der Haftung festgestellt.

Beispiele 45 bis 47

Aus dem im Verfahren A-C hergestellten Verbunden der Beispiele 6, 17 und 28 wurde ein Näpfchen Durchmesser 33 mm, Höhe 25 mm gezogen und anschließend in Isopropanol, Xylol, Solventnaphtha 100, Solvent, Naphtha 150 gelagert. Vor Beginn und nach 72 Stunden wurde die Haftung mit Tesatest geprüft. Es wurde keine Verminderung der Haftung festgestellt.

Beispiele 48 und 49

Aus den Verbunden der Beispiele 4 und 38 wurden Getränkedosen shells gestanzt. Diese wurden 30 min bei 78 °C sowie 100 °C im Wasser sterilisiert. Die Prüfung zeigt, daß der Verbund völlig beständig ist (keine Wasseraufnahme, kein Haftungsverlust).

**Patentansprüche**

1. Thermoplastische Verbundfolie, bestehend aus mindestens einer Haftvermittlerschicht (3) und mindestens einer weiteren, auf der Haftvermittlerschicht angeordneten thermoplastischen Deckschicht (2, 4), dadurch gekennzeichnet, daß die thermoplastische Verbundfolie ring- oder scheibenförmige wulstartige Verdickungen (5) der Haftvermittler- und/oder Deckschicht aufweist und daß die wulstartigen Verdickungen ein sich sowohl in der Quer- als auch in der Längsrichtung wiederholendes Muster bilden.

17

2. Metallblech mit einer auflaminierten thermoplastischen Folie, wobei die Folie ein sich wiederholendes Muster von Verdickungen aufweist, dadurch gekennzeichnet, daß eine thermoplastische Verbundfolie nach Anspruch 1 auflaminiert worden ist.

3. Metallblech oder thermoplastische Verbundfolie nach Anspruch 1 oder 2, dadurch gekennzeichnet, daß die wulstartigen Verdickungen eine Stärke von mindestens 2 μm, bevorzugt von mindestens 50 μm aufweisen.

4. Metallblech oder thermoplastische Verbundfolie nach einem der Ansprüche 1 bis 3, dadurch gekennzeichnet, daß die thermoplastische Verbundfolie eine Gesamtstärke kleiner als 500 μm, bevorzugt 10 bis 300 μm aufweist.

5. Metallblech oder thermoplastische Verbundfolie nach einem der Ansprüche 1 bis 4, dadurch gekennzeichnet, daß die Stärke der Haftvermittlerschicht der thermoplastischen Verbundfolien zwischen 0,5 und 100 μm, bevorzugt zwischen 1 und 70 μm und die Stärke der Deckschicht der thermoplastischen Verbundfolie zwischen 10 und 499,5 μm, bevorzugt zwischen 10 und 200 μm liegt.

6. Metallblech oder thermoplastische Verbundfolie nach einem der Ansprüche 1 bis 5, dadurch gekennzeichnet, daß die Haftvermittlerschicht der thermoplastischen Verbundfolie aus mindestens einem carboxylgruppenhaltigen Polymer, ggf. in Kombination mit weiteren Polymeren, aufgebaut ist.

7. Metallblech oder thermoplastische Verbundfolie nach einem der Ansprüche 1 bis 6, dadurch gekennzeichnet, daß die Deckschicht der thermoplastischen Verbundfolie aus einem geschäumten Polymer besteht.

8. Verfahren zur Herstellung von Metallblechen nach einem der Ansprüche 2 bis 7, dadurch gekennzeichnet, daß entweder
a) eine thermoplastische Verbundfolie auflaminiert wird, die ring- oder scheibenförmige wulstartige Verdickungen der Haftvermittler- und/oder Deckschicht aufweist oder
b) die thermoplastische Verbundfolie zunächst in einer gleichmäßigen Schichtstärke auflaminiert wird und dann durch Prägen und Pressen ring- oder scheibenförmige wulsartige Verdickungen mindestens einer der Harzschichten hergestellt werden.

9. Verfahren nach Anspruch 8, dadurch gekennzeichnet, daß die thermoplastische Verbundfolie hergestellt wird, indem
1. eine thermoplastische Folie oder eine mehrschichtige Verbundfolie aus Haftvermittler- und Deckschichten extrudiert und während oder nach der Extrusion derart verformt wurde, daß eine Oberfläche der Folie die wulstartigen Verdickungen aufweist und die andere Oberfläche entweder planeben ist oder die wulstartigen Verdickungen in Negativform, d. h. als Vertiefungen, enthält und
2. die so hergestellte oberflächenstrukturierte Folie an ihrer planebenen Oberfläche bzw. der Oberfläche mit den Vertiefungen mit einem Haftvermittler oder einem coextrudierten schichtförmigen Polymerverbund mit gleichen oder verschiedenen Haftvermittlerschichten an den beiden Oberflächen des Polymerverbundes so beschichtet worden ist, daß die Oberflächenstruktur der thermoplastischen Deckschicht erhalten bleibt.

10. Verfahren nach Anspruch 8, dadurch gekennzeichnet, daß die thermoplastische Verbundfolie hergestellt wird durch Coextrusion der Haftvermittler- und Deckschicht und anschließende Verformung der thermoplastischen Verbundfolie derart, daß die Deckschicht die wulstartigen Verdickungen aufweist.

11. Verfahren nach Anspruch 8, dadurch gekennzeichnet, daß die thermoplastische Verbundfolie hergestellt worden ist, indem zunächst eine planebene thermoplastische Monofolie oder ein Verbund mit einer Haftvermittlerschicht oder einem Polymerverbund, bei dem mindestens eine Oberfläche aus einer Haftvermittlerschicht besteht, verbunden worden ist und anschließend die so erhaltene, planebene thermoplastische Verbundfolie derart umgeformt worden ist, daß eine Oberfläche planeben ist und die andere Oberfläche die wulstartigen Verdickungen aufweist.

12. Verfahren nach einem der Ansprüche 8 bis 10, dadurch gekennzeichnet, daß das Metallblech mit der thermoplastischen Verbundfolie beschichtet wird, indem
A) die thermoplastische Verbundfolie mit den wulstartigen Verdickungen und das Metallblech derart aufeinandergelegt werden, daß eine Haftvermittlerschicht auf der Metalloberfläche angeordnet ist,

B) die Haftvermittlerschicht auf eine Temperatur erhitzt wird, die mindestens gleich dem Schmelzpunkt der Haftvermittlerschicht ist, die aber unterhalb des Schmelzpunktes der auf der Haftvermittlerschicht angeordneten thermoplastischen Schicht liegt und

C) die thermoplastische Verbundfolie unter Druck auflaminiert wird, wobei der Druck so gewählt wird, daß die Verminderung der Höhe der wulstartigen Verdickungen beim Auflaminieren maximal 10 % der ursprünglichen Höhe der Verdickungen beträgt.

13. Verfahren nach Anspruch 8 oder 11, dadurch gekennzeichnet, daß das Metallblech mit der thermoplastischen Verbundfolie beschichtet wird, indem

A) eine thermoplastische, keine wulstartigen Verdickungen aufweisende Verbundfolie und das Metallblech derart aufeinandergelegt werden, daß eine Haftvermittlerschicht auf der Metalloberfläche angeordnet ist,

B) die Haftvermittlerschicht auf eine Temperatur erhitzt wird, die mindestens gleich dem Schmelzpunkt der Haftvermittlerschicht ist, die aber unterhalb des Schmelzpunktes der auf der Haftvermittlerschicht angeordneten thermoplastischen Schicht liegt und

C) die thermoplastische Verbundfolie unter Druck derart auflaminiert wird, daß die wulstartigen Verdickungen beim Auflaminieren oder direkt im Anschluß an das Auflaminieren der Verbundfolie entstehen.

14. Verwendung der Metallbleche nach einem der Ansprüche 2 bis 7 zur Herstellung von Verpackungsbehältern.

15. Verwendung der Metallbleche nach einem der Ansprüche 2 bis 7 zur Herstellung von Verschlußteilen für Verpackungsbehälter.

## Claims

1. Thermoplastic composite film, comprising at least one adhesion-promoter layer (3) and at least one further, thermoplastic top layer (2, 4) arranged on the adhesion-promoter layer, characterised in that the thermoplastic composite film has annular or discoid, collar-like thickenings (5) of the adhesion-promoter and/or top layer, and in that the collar-like thickenings form a pattern which recurs in both the transverse and longitudinal directions.

2. Metal sheet laminated with a thermoplastic film, where the film has a recurring pattern of thickenings, characterised in that a thermoplastic composite film according to Claim 1 has been laminated on.

3. Metal sheet or thermoplastic composite film according to Claim 1 or 2, characterised in that the collar-like thickenings have a thickness of at least 2 $\mu$m, preferably of at least 50 $\mu$m.

4. Metal sheet or thermoplastic composite film according to any one of Claims 1 to 3, characterised in that the thermoplastic composite film has an overall thickness (dry) of less than 500 $\mu$m, preferably 10 to 300 $\mu$m.

5. Metal sheet or thermoplastic composite film according to any one of Claims 1 to 4, characterised in that the thickness of the adhesion-promoting layer of the thermoplastic composite films is between 0.5 and 100 $\mu$m, preferably between 1 and 70 $\mu$m, and the thickness of the top layer of the thermoplastic composite film is between 10 and 499.5 $\mu$m, preferably between 10 and 200 $\mu$m.

6. Metal sheet or thermoplastic composite film according to any one of Claims 1 to 5, characterised in that the adhesion-promoting layer of the thermoplastic composite film comprises at least one carboxyl-containing polymer, optionally in combination with other polymers.

7. Metal sheet or thermoplastic composite film according to any one of Claims 1 to 6, characterised in that the top layer of the thermoplastic composite film consists of a foamed polymer.

8. Process for the production of metal sheets according to one of Claims 2 to 7, characterised in that either

a) a thermoplastic composite film which has annular or discoid, collar-like thickenings of the adhesion-promoter and/or top layer is laminated on, or

b) the thermoplastic composite film is first laminated on in a uniform layer thickness, and annular or discoid, collar-like thickenings of at least one of the resin layers are produced by embossing and pressing.

9.  Process according to Claim 8, characterised in that the thermoplastic composite film is prepared by

    1. extruding a thermoplastic film or a composite film comprising adhesion-promoting and top layers, said film being shaped either during or after the extrusion in such a way that one surface of the film has the collar-like thickenings and the other surface is either flat or contains the collar-like thickenings in negative profile, i.e. as depressions and

    2. coating the thus prepared surface-textured film on its flat surface or on the surface having the depressions with an adhesion promoter or a coextruded laminar polymer composite having identical or different adhesion-promoting layers on the two surfaces of the polymer composite, in such a way that the surface texture of the thermoplastic top layer is retained.

10. Process according to Claim 8, characterised in that the thermoplastic composite film is prepared by co-extrusion of the adhesion-promoting layer and top layer followed by shaping of the thermoplastic composite film in such a way that the top layer has the collar-like thickenings.

11. Process according to Claim 8, characterised in that the thermoplastic composite film is prepared by first bonding a flat thermoplastic monofilm or a composite having an adhesion-promoting layer or a polymer composite in which at least one surface consists of an adhesion-promoting layer, and then shaping the resulting flat thermoplastic composite film in such a way that one surface is flat and the other surface has the collar-like thickenings.

12. Process according to any one of Claims 8 to 10, characterised in that the metal sheet is coated with the thermoplastic composite film by

    A) laying on top of one another the thermoplastic composite film having the collar-like thickenings and the metal sheet in such a way that an adhesion-promoting layer is arranged on the metal surface,

    B) heating the adhesion-promoting layer to a temperature which is at least equal to the melting point of the adhesion-promoting layer but which is below the melting point of the thermoplastic layer arranged on the adhesion-promoting layer and

    C) laminating on the thermoplastic composite film under pressure, the pressure being selected so that the reduction in the height of the collar-like thickenings during lamination is at most 10 % of the original height of the thickenings.

13. Process according to Claim 8 or 11, characterised in that the metal sheet is coated with the thermoplastic composite film by

    A) laying on top of one another a thermoplastic composite film which has no collar-like thickenings and the metal sheet in such a way that an adhesion-promoting layer is arranged on the metal surface,

    B) heating the adhesion-promoting layer to a temperature which is at least equal to the melting point of the adhesion-promoting layer but which is below the melting point of the thermoplastic layer which is arranged on the adhesion-promoting layer and

    C) laminating the thermoplastic composite film under pressure in such a way that the collar-like thickenings are produced during lamination of the composite film or immediately after lamination of the composite film.

14. Use of the metal sheets according to any one of Claims 2 to 7 for the production of packaging containers.

15. Use of the metal sheets according to any one of Claims 2 to 7 for the production of closure components for packaging containers.

## Revendications

1.  Feuille composite thermoplastique, constituée d'au moins une couche promotrice d'adhérence (3) et d'au moins une autre couche de couverture thermoplastique (2, 4) disposée sur la couche promotrice d'adhérence, caractérisée en ce que la feuille composite thermoplastique présente des épaississements en bourrelet (5) en forme d'anneaux ou de disques, sur la couche promotrice d'adhérence et/ou sur la couche de couverture, et que les épaississements en bourrelet forment un dessin répétitif, tant dans le sens transversal que dans le sens longitudinal.

2. Tôle métallique sur laquelle a été appliquée une feuille thermoplastique, la feuille présentant un dessin répétitif d'épaississement, caractérisée en ce qu'on a appliqué une feuille composite thermoplastique selon la revendication 1.

3. Tôle métallique ou feuille composite thermoplastique selon la revendication 1 ou 2, caractérisée en ce que les épaississements en bourrelet ont une épaisseur d'au moins 2 $\mu$m, et de préférence d'au moins 50 $\mu$m.

4. Tôle métallique ou feuille composite thermoplastique selon l'une des revendications 1 à 3, caractérisée en ce que la feuille composite thermoplastique a une épaisseur totale inférieure à 500 $\mu$m, de préférence de 10 à 300 $\mu$m.

5. Tôle métallique ou feuille composite thermoplastique selon l'une des revendications 1 à 4, caractérisée en ce que l'épaisseur de la couche promotrice d'adhérence des feuilles composites thermoplastiques est comprise entre 0,5 et 100 $\mu$m, de préférence entre 1 et 70 $\mu$m, et que l'épaisseur de la couche de couverture de la feuille composite thermoplastique est comprise entre 10 et 499,5 $\mu$m, de préférence entre 10 et 200 $\mu$m.

6. Tôle métallique ou feuille composite thermoplastique selon l'une des revendications 1 à 5, caractérisée en ce que la couche promotrice d'adhérence de la feuille composite thermoplastique est constituée d'au moins un polymère carboxylé, éventuellement en combinaison avec d'autres polymères.

7. Tôle métallique ou feuille composite thermoplastique selon l'une des revendications 1 à 6, caractérisée en ce que la couche de couverture de la feuille composite thermoplastique est constituée d'un polymère expansé.

8. Procédé pour préparer des toles métalliques selon l'une des revendications 2 à 7, caractérisé en ce que :
a) on applique une feuille composite thermoplastique, présentant des épaississements en bourrelet, en forme d'anneaux ou de disques, sur la couche promotrice d'adhérence et/ou la couche de couverture, ou
b) on applique d'abord la feuille composite thermoplastique selon une épaisseur de couche uniforme, puis, par gauffrage et compression, on réalise des épaississements en bourrelet, en forme d'anneaux ou de disques, d'au moins l'une des couches de résine.

9. Procédé selon la revendication 8, caractérisé en ce qu'on prépare la feuille composite thermoplastique de la mantière suivante :
1) on extrude une feuille thermoplastique ou une feuille composite multicouches constituée de couches promotrices d'adhérence et de couches de couverture et, pendant ou après l'extrusion, on la transforme de façon que la surface de la feuille présente les évidements en bourrelets, et que l'autre surface soit plane ou contienne les épaississements en bourrelet sous forme négative, c'est-à-dire sous forme d'évidements, et
2) la feuille à surface structurée ainsi obtenue est, sur sa surface plane ou sur la surface comportant les évidements et présentant un promoteur d'adhérence ou un composite polymère co-extrudé en couche, de couches promotrices d'adhérence identiques ou différentes sur les deux surfaces du composite polymère, de façon que se maintienne la structure superficielle de la couche de couverture thermoplastique.

10. Procédé selon la revendication 8, caractérisé en ce qu'on prépare la feuille composite thermoplastique par co-extrusion de la couche promotrice d'adhérence et de la couche de couverture, puis transformation de la feuille composite thermoplastique de façon que la couche de couverture présente les épaississements en bourrelet.

11. Procédé selon la revendication 8, caractérisé en ce qu'on prépare la feuille composite thermoplastique en assemblant d'abord une feuille monocouche thermoplastique plane, ou un composite avec une couche promotrice d'adhérence ou un composite polymère dont au moins une surface est constituée d'une couche promotrice d'adhérence, puis on transforme la feuille composite thermoplastique plane ainsi obtenue de façon qu'une surface soit plane et que l'autre surface présente les épaississements en bourrelet.

**12.** Procédé selon l'une des revendications 8 à 10, caractérisé en ce qu'on enduit la tôle métallique de la feuille composite thermoplastique de la manière suivante :

A) on applique l'une sur l'autre la feuille composite thermoplastique présentant les épaississements en bourrelet et la tôle métallique, de façon à avoir une couche promotrice d'adhérence sur la surface du métal,

B) on chauffe la couche promotrice d'adhérence à une température au moins égale au point de fusion de la couche promotrice d'adhérence, mais qui est cependant inférieure au point de fusion de la couche thermoplastique disposée sur la couche promotrice d'adhérence, et

C) on applique sous pression la feuille composite thermoplastique, la pression étant choisie de façon que la diminution de hauteur des épaississements en bourrelet soit, lors de l'application, au maximum de 10 % de la hauteur initiale des épaississements.

**13.** Procédé selon la revendication 8 ou 11, caractérisé en ce qu'on enduit la tôle métallique de la feuille composite thermoplastique de la manière suivante :

A) on applique l'une sur l'autre une feuille composite thermoplastique ne présentant pas d'épaississements en bourrelet et la tôle métallique, de façon à avoir une couche promotrice d'adhérence sur la surface du métal,

B) on chauffe la couche promotrice d'adhérence à une température au moins égale au point de fusion de la couche promotrice d'adhérence, mais qui est cependant inférieure au point de fusion de la couche thermoplastique disposée sur la couche promotrice d'adhérence, et

C) on applique sous pression la feuille composite thermoplastique de façon que les épaississements en bourrelet se forment lors de l'application, par contre-collage ou immédiatement après le contre-collage de la feuille composite.

**14.** Utilisation des tôles métalliques selon l'une des revendications 2 à 7 pour réaliser des récipients d'emballage.

**15.** Utilisation des tôles métalliques selon l'une des revendications 2 à 7, pour réaliser des pièces de fermeture destinées à des récipients d'emballage.

Abb. 2

Abb. 1

Abb. 3

Abb. 4

Abb. 5